# EUROPEAN PATENT SPECIFICATION

(11) **EP 4 558 305 B1**
(45) Date of publication and mention of the grant of the patent: **08.04.2026**
(21) Application number: 23745278.4
(22) Date of filing: 11.07.2023
(51) Int. Cl.: B24B 9/00, B24B 9/10, B28D 7/04, B28D 1/00, B24B 41/06, B24B 27/00

(54) **METHOD AND APPARATUS FOR HOLDING AND PERFORMING WORK ON A SHEET**
VERFAHREN UND VORRICHTUNG ZUM HALTEN UND AUSFÜHREN VON ARBEITEN AUF EINER PLATTE
PROCÉDÉ ET APPAREIL POUR MAINTENIR ET EXÉCUTER UN TRAVAIL SUR UNE FEUILLE

(30) Priority: 19.07.2022 IT 202200015081
(43) Date of publication of application: 28.05.2025
(73) Proprietor: Forel Spa, 31056 Roncade (TV) (IT)
(72) Inventor: VIANELLO, Fortunato, 31056 RONCADE (TV) (IT); VIANELLO, Riccardo, 31056 RONCADE (TV) (IT)
(74) Representative: Petraz, Davide Luigi
(86) International application number: PCT/IT2023/050160
(87) International publication number: WO 2024/018495

(56) References cited:
- EP-A1- 2 762 273
- EP-A1- 3 170 622
- WO-A1-2020/157622
- JP-B2- 3 483 975

## Description

### FIELD OF THE INVENTION

The present invention concerns a method and an apparatus for holding a sheet, made of glass or other materials, substitutes for glass, in particular while its perimeter edge is being worked, especially in the zones adjacent to the corners, or in general adjacent to discontinuities between two contiguous surfaces, of the perimeter edge.

### BACKGROUND OF THE INVENTION

Apparatuses for working pre-cut glass sheets in various shapes - rectangular, triangular, trapezoidal, etc. - are known, the sheets subsequently undergoing further work, usually involving the removal of material, to create a finished or semi-finished product.

Known apparatuses normally comprise one or more units for moving the sheet and at least one stationary work unit having a work head, angularly orientable and mobile in a substantially vertical work direction.

The work head has one or more work tools and a stabilizing device which is able to temporarily couple to the perimeter edge of the sheet in order to stabilize its position and prevent unwanted and harmful vibrations.

The stabilizing device comprises a pair of jaws or gripping members, on which idle wheels or other holding elements are mounted, having a closing/opening movement so that the wheels can hold the sheet.

When the work tool reaches a corner, defined as the intersection of two adjacent sides of the perimeter edge of the sheet, it is moved vertically to continue working the perimeter edge. This occurs irrespective of the position assumed by the wheels because the component that is rotated is the stabilizing device associated with the work head.

The method described above works well for shapes of the sheet that are close to rectangular, because the wheels maintain a constant distance from the edge of the glass sheet. On the other hand, if a sheet has a different shape from rectangular and/or has sharp or rounded vertexes, the wheels are unable to hold the sheet correctly because, during the working of a corner, they can lose contact with the sheet itself, exiting from its outline. In this case, the wheels have to regain contact with the sheet through a new insertion.

This causes, in correspondence with these vertexes, a poor quality of the finished product in terms of: non-compliance with dimensional tolerances; poor or unacceptable surface finish; damage to possible nanotechnological coating present on the surfaces of the sheet; and sometimes breakage of the sheet during working, especially in the case of reduced thicknesses.

A known apparatus and method for holding and working a sheet is described, for example, in the prior art document EP 3 170 622 A1.

There is therefore a need to perfect a method for holding a sheet and performing work on it which can overcome at least one of the disadvantages of the state of the art.

One purpose of the present invention, which corresponds to the technical problem to be solved, is to perfect a method and create a corresponding apparatus for effectively holding even a sheet that has a shape other than rectangular, in particular in the proximity of sharp or rounded vertexes of its perimeter edge, during the working of the latter.

Another purpose of the present invention is to perfect a method able to work sheets of any shape in a fast, stable and reliable manner, offering a high-quality finished product at outlet.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes and to resolve the technical problem disclosed above in a new and original way, also achieving considerable advantages compared to the state of the prior art, a method has been embodied for holding and performing work on a sheet that has a first lateral surface, an opposing second lateral surface and a perimeter edge, comprising:
- a holding step, in which first and second gripping members of a stabilizing device associated with a work head hold the sheet in a sliding manner contacting it in at least two respective contact zones which lie on the first and second lateral surface,
- a work step, in which a work tool works the perimeter edge, and
depending on the side of the perimeter edge on which the work tool is performing the work, also the following coordinated steps:
- a step of moving the sheet, in which the sheet is made to advance or retract with respect to the work tool in a direction of advance, and/or
- a step of moving the work head, in which the work head is moved along a work axis.

In accordance with one aspect of the present invention, during the work step in which the work tool works the corner of the perimeter edge, the method also comprises an orientation step, in which the work head, and with it the stabilizing device, is angularly oriented by a determinate angle of orientation in a manner that is coordinated with the step of moving the sheet and/or the work head.

In particular, the work head, and with it the stabilizing device, is angularly oriented by a determinate angle in a manner that is coordinated with the step of moving the sheet and the work head, in order to maintain the contact zones within the first and second lateral surface.

In accordance with an advantageous aspect of the present invention, the work head, and with it the stabilizing device, is angularly oriented by a determinate angle in a manner that is coordinated with the step of moving the sheet and the work head, in order to maintain the contact zones on the bisector of an angle comprised between the sides adjacent to the corner.

By doing so, the sheet is always held in a symmetrical and balanced manner so that the vibrations caused by the motion of the work tool against the sheet are reduced to a minimum.

This holding condition also allows to maintain the contact elements engaged with the sheet at all times.

The direct consequence of such a holding condition is that the work is much more precise and the mechanical stresses on the sheet are limited.

In accordance with another aspect of the present invention, while the corner is being worked, the angle of orientation is a function of the angle comprised between the sides adjacent to the corner.

In accordance with another aspect of the present invention, while the corner is being worked, the angle of orientation is also a function of the position of the sheet in the direction of advance.

In accordance with one another of the present invention, the work step occurs without interruptions or discontinuities.

In accordance with another aspect of the present invention, the angle is smaller than 90°. In fact, this method is particularly advantageous above all for acute angles which, because of constitution and geometry, are more fragile.

In accordance with another aspect of the present invention, the corner can be sharp, that is, cutting and not beveled, or rounded with a certain radius of curvature.

Some embodiments of the present invention also concern an apparatus for working sheets comprising:
- movement means configured to move at least one sheet at a time in a direction of advance,
- at least one work unit comprising a work head on which at least a work tool and a stabilizing device are installed, the stabilizing device having opposing and facing first gripping members and second gripping members, wherein the work head is both linearly mobile and also selectively rotatable, and with it the stabilizing device, according to an angle of orientation.

In accordance with one aspect of the present invention, the apparatus comprises a central control unit configured to execute a specific work program which contains the scripts to manage at least the movement means and the work head in a coordinated manner, so that the apparatus executes the method as described.

In accordance with one aspect of the present invention, the gripping members are disposed at a fixed radial distance from the work tool.

According to a variant, the gripping members are disposed at an adjustable radial distance from the work tool.

In accordance with one aspect of the present invention, the central control unit is configured to receive at input all the geometric data able to define the shape and sizes of the sheet, including an initial position of the sheet in the direction of advance.

In accordance with one aspect of the present invention, the central control unit is configured to receive at input the value of the radial distance.

### DESCRIPTION OF THE DRAWINGS

These and other aspects, characteristics and advantages of the present invention will become apparent from the following description of an embodiment, given as a non-restrictive example with reference to the attached drawings wherein:
- fig. 1 is a schematic view of an apparatus for working sheets according to the present invention;
- fig. 2 is a schematic view of the sheet held between the gripping members;
- figs. 3-8 show a schematic operating sequence of the working of a corner of the sheet in accordance with the method according to the present invention.

We must clarify that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings.

### DESCRIPTION OF AN EMBODIMENT OF THE PRESENT INVENTION

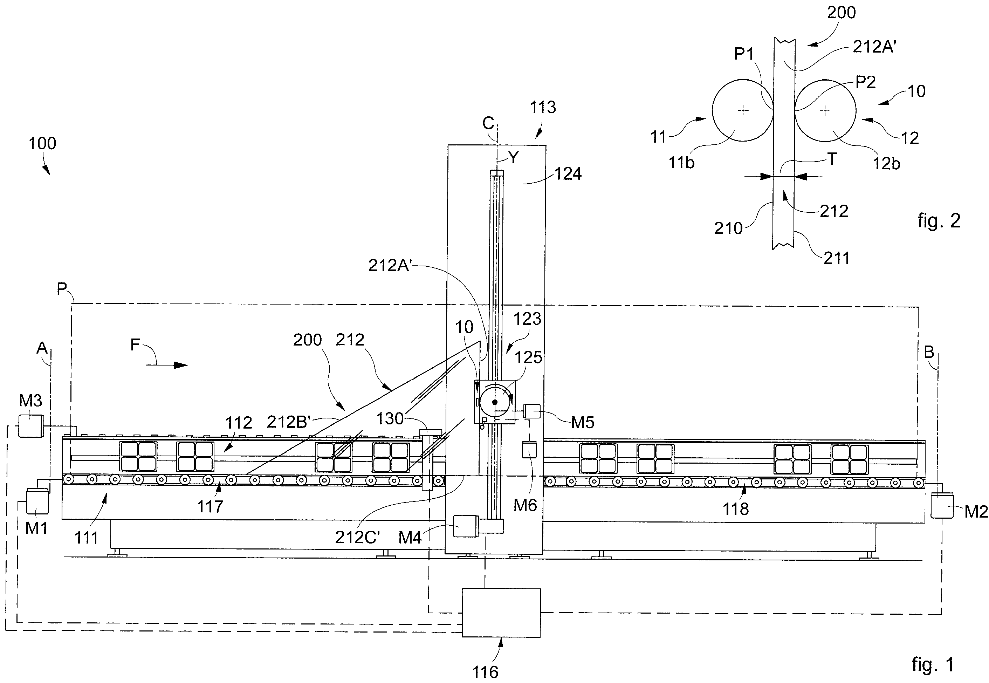

With reference to fig. 1, this shows an apparatus 100 according to the present invention, configured to carry out material removal work on sheets 200 made of glass, or more generally of a fragile material with a behavior similar to glass.

Each sheet 200 has a first lateral or front surface 210, an opposing second lateral or rear surface 211, and a perimeter edge 212 having a known or previously measured thickness T (fig. 2). The lateral surfaces 210, 211 are essentially flat and can have a rectangular, circular, elliptical, curvilinear, trapezoidal, triangular or polygonal shape, or a combination thereof.

For example, as can be seen in the attached drawings, in the case of a triangular sheet, the perimeter edge 212 can be defined by a frontal side 212A', an opposing rear side 212B', and a lower side 212C'.

According to some embodiments, the apparatus 100 comprises an inlet section A, in correspondence with which one or more sheets 200 to be worked are supplied to the apparatus 100, and an outlet section B, in correspondence with which the worked sheets 200 are evacuated from the apparatus 100.

The apparatus 100 comprises a work plane P, shown by way of example in fig. 1 with a dashed line, which is substantially vertical and on which the sheets 200 rest with respect to one of the two lateral surfaces 210, 211.

The apparatus 100 comprises a first movement unit 111, for example of the roller type, comprising an inlet conveyor 117 driven by a first motor M1 and an outlet conveyor 118 driven by a second motor M2, and configured to move one or more of the sheets 200 on the work plane P in a direction of advance F, which goes from the inlet section A to the outlet section B, supporting it and dragging it at the lower part.

The apparatus 100 comprises a second movement unit 112 of the sucker type driven by means of a third motor M3 and configured to hold and move the sheet 200 on the work plane P in the direction of advance F by dragging it laterally, that is, with respect to its first lateral surface 210, that is, the front one, or more advantageously with respect to its second lateral surface 211, that is, the rear one.

The first and second movement unit 111, 112 can be activated simultaneously to cooperate in the movement of the same sheet 200, or they can be activated independently.

The apparatus 100 comprises at least one work unit 113 having a vertical or inclined configuration, substantially parallel to the work plane P and being disposed in correspondence with an intermediate section C which is positioned between the inlet section A and the outlet section B.

The work unit 113 comprises a work head 123 and a guide 124 which develops along a work axis Y and along which the work head 123 is sliding, the movement of the work head 123 being managed by a fourth motor M4.

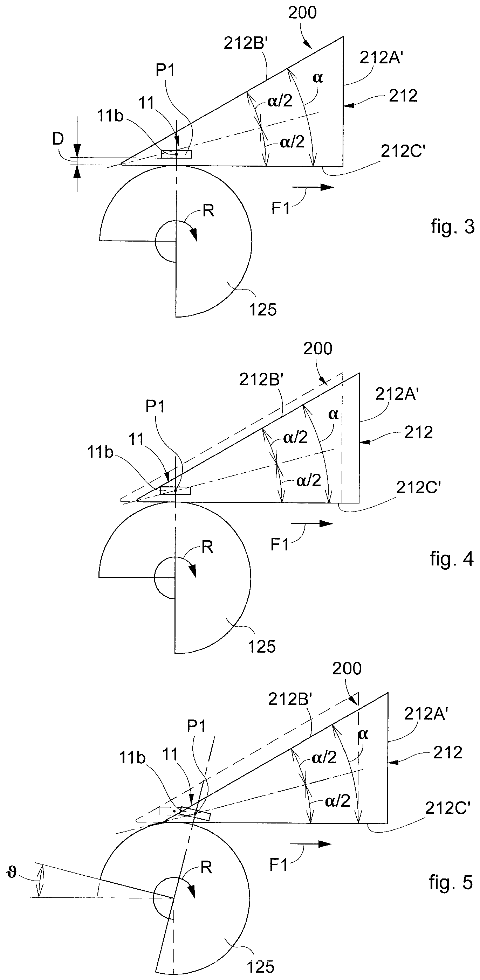

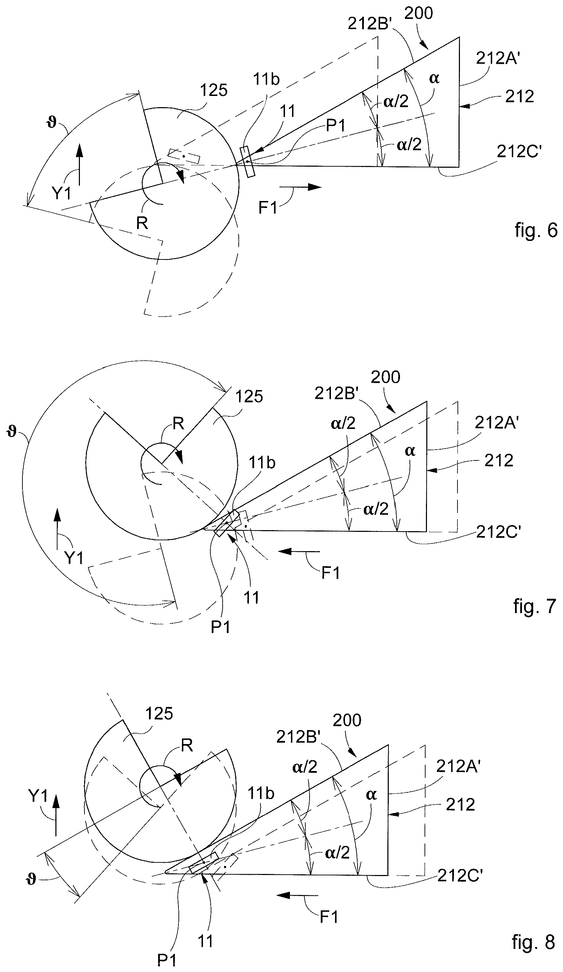

The work unit 113 comprises a work tool 125 associated with the work head 123. The work tool 125 is keyed onto a spindle associated with the work head 123, in a manner known per se, and its rotation (arrow R in figs. 3-8) is managed by a fifth motor M5.

In the embodiment described here, the work tool 125 is a grinding wheel. However, it is not excluded that the work tool 125 is configured to perform other work.

The work unit 113 also comprises a stabilizing device 10 associated with the work head 123 and configured to hold the sheet 200 in correspondence with its perimeter edge 212 and in proximity to the work tool 125, stabilizing its position in order to avoid vibrations during working.

With particular reference to fig. 2, the stabilizing device 10 comprises first gripping members 11 and opposing and facing second gripping members 12.

The first and second gripping members 11, 12 comprise a respective support element (not shown) which can be for example a jaw, and at least one respective contact element 11b, 12b, which in the present case is a wheel or an idle roller with axis orthogonal to the axis of rotation of the work tool 125.

The contact elements 11b, 12b are configured to hold the sheet 200 in a sliding manner by contacting it in at least two respective contact zones P1, P2 which lie on the first and second lateral surface 210, 211. In a more general sense, these contact zones P1, P2 can correspond to respective contact areas, with a rectangular or other shape, which are more or less extended according to the degree of deformability which the contact elements 11b, 12b or their coating consist of.

While the sheet 200 is being held, both contact elements 11b, 12b remain in contact with the sheet 200 in correspondence with the contact zones P1, P2.

The gripping members 11, 12 are disposed at a distance D from the peripheral surface of the work tool 125 which is fixed, see for example fig. 3.

The first and second gripping members 11, 12 are located, during use, respectively on one part and on the other of the sheet 200, and at least one of them is able to be selectively moved along a gripping and release axis, which is orthogonal to the lateral surfaces 210, 211, according to a suitably calibrated relative approach/distancing movement.

The work head 123, and with it the stabilizing device 10, is able to be orientated according to an angle of orientation θ by means of a sixth motor M6. The rotation according to the angle of orientation θ is functional to correctly orient the first and second gripping members 11, 12 with respect to the sheet 200. In fact, since the work tool 125, at least in the case of the grinding wheel, has a cylindrical conformation, its angular orientation around its own axis of rotation would in any case not entail any effective variation in its functionality.

Particularly if the sheet 200 has a shape with acute vertexes between one side and the next of its perimeter edge 212 and work has to be performed in proximity to the vertex, the possibility of rotating and suitably positioning the first and second gripping members 11, 12 becomes crucial to maintain a firm grip on the sheet 200 and avoid vibrations during working.

The apparatus 100 comprises a central control unit 116 configured at least to manage the first movement unit 111, the second movement unit 112 and the work unit 113, including the work head 123 with the work tool 125 and the stabilizing device 10 (in its opening-closing movement), in order to guarantee the execution of optimized work on the sheet 200.

The central control unit 116 is configured to execute a specific work program which contains the scripts for managing at least the forward/reverse motion of the sheet 200, and the linear and angular movement of the work head 123 in a coordinated manner, so that the apparatus 100 executes the work method described below. Favorably, the work program is parameterized on the basis of both physical data relating to the sheet and also physical data relating to the work tool 125.

Thanks to the work program, for each individual situation (acute, obtuse vertexes of the sheet, etc.) the ideal positioning conditions of the gripping members 11, 12 are identified by rotating the work head 123, and with it the stabilizing device 10, by the angle of orientation θ.

The operation of the apparatus 100, which corresponds to the method according to the present invention, comprises the following steps.

A pre-positioning step which occurs in a manner per se known by detecting the position of at least one side of the perimeter edge 212, in which the sheet 200 is pre-positioned with respect to the work tool 125.

The pre-positioning step can occur by means of the first movement unit 111, the second movement unit 112 or in a combined manner.

Immediately after the sheet 200 has reached the correct position relative to the work tool 125, the method comprises a holding step, in which the contact elements 11b, 12b of the first and second gripping members 11, 12 hold the sheet 200 with respect to the two front 210 and rear 211 surfaces.

The sheet 200 is held in a sliding manner. In other words, when during working it is made to slide forward or backward in the direction of advance F, the sheet 200 can also slide with respect to the contact elements 11b, 12b.

The contact elements 11b, 12b contact the sheet 200 in correspondence with at least two contact zones P1, P2 which lie on the first and second lateral surface 210, 211.

As shown by way of example in figs. 3-8 where a possible operating work sequence can be seen, the method then provides a work step during which the work tool 125 works the perimeter edge 212.

Depending on the side of the perimeter edge 212 on which the work tool 125 is operating, at the same time as the work step the following can take place: a coordinated step of moving the sheet 200 (arrows F1), which is made to advance or retract with respect to the work tool 125 in the direction of advance F, and/or a coordinated step of moving the work head 123 along the work axis Y (arrows Y1). The sheet 200 is held in a sliding manner when the relative movement between the sheet 200 and the contact elements 11b, 12b occurs according to the direction of advance F, according to the work axis Y and also according to the combinations of these directions.

According to the present invention, while a corner of the sheet 200 is being worked (figs. 5-8) the method also comprises an orientation step in which the work head 123, and with it the stabilizing device 10, is oriented angularly (angle of orientation 0) in a manner that is coordinated with the step of moving the sheet 200 and/or the work head 123, in order to maintain the contact zones P1, P2 always within the first and second lateral surface 210, 211.

According to some embodiments, the contact zones P1, P2 are advantageously located on the bisector of the corner, in particular on the bisector of the angle α comprised between the sides adjacent to the corner.

In the event that the contact zones P1, P2 have a circular, ellipsoidal or polygonal shape, or other geometric shapes, preferably but not exclusively regular, the method provides to maintain a center of the contact zones P1, P2 on the bisector of the angle α, or at least as much as possible in correspondence with such bisector.

Since the distance D from the peripheral surface of the work tool 125 is fixed, the condition of correspondence of the contact zones P1, P2 with the bisector as above occurs only in proximity to the corners.

The method provides to start the orientation step the moment in which the contact zones P1, P2 lie on the bisector for the first time. The greater the distance D, the earlier the orientation step takes place.

Moreover, in general terms, it is possible to correlate the angle of orientation θ with parameters such as the distance D, the angle α comprised between the sides adjacent to the corner, the movement of the sheet 200 in the direction of advance F, and the movement of the work head 123 along the work axis Y.

It is clear that modifications and/or additions of parts may be made to the method for working sheets 200 as described heretofore, without departing from the field and scope of the present invention, as defined by the claims.

It is also clear that, although the present invention has been described with reference to some specific examples, a person of skill in the art will be able to achieve other equivalent forms of apparatus and method for holding and performing work on a sheet, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Method for holding and performing work on a sheet (200) that has a first and a second opposing lateral surface (210, 211) and a perimeter edge (212), comprising:
- a holding step, in which first and second gripping members (11, 12) hold said sheet (200) in a sliding manner, contacting it in at least two respective contact zones (P1, P2) of said first and second lateral surface (210, 211),
- a work step, in which a work tool (125) works said perimeter edge (212), during which the following coordinated steps also occur
- a step of moving said sheet (200), which is made to advance or retract with respect to said work tool (125) in a direction of advance (F), and
- a step of moving a work head (123), on which there are installed at least a work tool (125) and a stabilizing device (10) having said opposing and facing first and second gripping members (11, 12), said work tool (125) being moved along a work axis (Y),
**characterized in that** when said work tool (125) performs the work in proximity to or in correspondence with a corner of said perimeter edge (212), said method comprises a step in which said work head (123), and with it said stabilizing device (10), is angularly oriented by an angle of orientation (θ) in a manner that is coordinated with said step of moving said sheet (200) and/or said work head (123), in order to maintain said contact zones (P1, P2) within said first and second lateral surface (210, 211).

2. Method as in claim 1, **characterized in that** said work head (123), and with it said stabilizing device (10), is angularly oriented by an angle of orientation (θ) in a manner that is coordinated with said step of moving said sheet (200) and said work head (123), in order to maintain said contact zones (P1, P2) on the bisector of an angle (α) comprised between the sides adjacent to said corner.

3. Method as in claim 2, **characterized in that** while said corner is being worked, said angle of orientation (θ) is a function of said angle (α).

4. Method as in any claim hereinbefore, **characterized in that** while said corner is being worked, said angle of orientation (θ) is also a function of the position of said sheet (200) in said direction of advance (F) and of the position of said work head (123) along said work axis (Y).

5. Method as in any claim hereinbefore, **characterized in that** said work step occurs without interruptions or discontinuities.

6. Method as in claim 2 or 3, **characterized in that** said angle (α) is smaller than 90°.

7. Method as in any claim hereinbefore, **characterized in that** said corner is sharp or rounded.

8. Apparatus (100) for working sheets (200) comprising:
- movement means (111, 112) configured to move at least one sheet (200) in a direction of advance (F),
- at least one work unit (113) comprising a work head (123) on which at least a work tool (125) and a stabilizing device (10) are installed, said stabilizing device (10) having opposing and facing first and second gripping members (11, 12), wherein said work head (123) is both linearly mobile and also selectively rotatable, and with it said stabilizing device (10), according to an angle of orientation (θ), **characterized in that** it comprises a central control unit (116) configured to execute a specific work program which contains the scripts to manage at least said movement means (111, 112) and said work head (123) in a coordinated manner, so that said apparatus (100) executes the method as in any claim hereinbefore.

9. Apparatus (100) as in claim 8, **characterized in that** said gripping members (11, 12) are disposed at a fixed radial distance (D) from said work tool (125).

10. Apparatus (100) as in claim 8, **characterized in that** said gripping members (11, 12) are disposed at an adjustable radial distance (D) from said work tool (125).

11. Apparatus (100) as in any claim from 8 to 10, **characterized in that** said central control unit (116) is configured to receive at input all the geometric data able to define the shape and sizes of said sheet (200), including an initial position of said sheet (200) in said direction of advance (F).

12. Apparatus as in any claim from 9 to 11, **characterized in that** said central control unit (116) is configured to receive at input the value of said distance (D) of the gripping members from said work tool.

## Patentansprüche

1. Verfahren zum Halten und Durchführen einer Bearbeitung an einer Platte (200), die eine erste und eine zweite, entgegengesetzte Seitenfläche (210, 211) und einen Umfangsrand (212) hat, aufweisend:
- einen Halteschritt, in dem ein erstes und ein zweites Greifelement (11, 12) die Platte (200) verschiebbar halten und sie in mindestens zwei jeweiligen Kontaktzonen (P1, P2) der ersten und der zweiten der Seitenfläche (210, 211) berühren,
- einen Bearbeitungsschritt, in dem ein Bearbeitungswerkzeug (125) den Umfangsrand (212) bearbeitet, wobei währenddessen auch die folgenden koordinierten Schritte erfolgen
- ein Schritt zum Bewegen der Platte (200), die in Bezug auf das Bearbeitungswerkzeug (125) in einer Vorwärtsbewegungsrichtung (F) vorwärtsbewegt oder zurückbewegt wird, und
- ein Schritt zum Bewegen eines Bearbeitungskopfes (123), an dem mindestens ein Bearbeitungswerkzeug (125) und eine Stabilisierungsvorrichtung (10) installiert sind, welche das erste und das zweite Greifelement (11, 12) hat, die einander gegenüberliegenden und zugewandt sind, wobei das Bearbeitungswerkzeug (125) entlang einer Bearbeitungsachse (Y) bewegt wird,
**dadurch gekennzeichnet, dass,** wenn das Bearbeitungswerkzeug (125) die Bearbeitung in der Nähe von oder in Übereinstimmung mit einer Ecke des Umfangsrands (212) durchführt, das Verfahren einen Schritt aufweist, in dem der Bearbeitungskopf (123), und mit ihm die Stabilisierungsvorrichtung (10), in einem Ausrichtungswinkel (θ) in einer Weise winkelausgerichtet wird, die mit dem Schritt des Bewegens der Platte (200) und/oder des Bearbeitungskopfes (123) koordiniert ist, um die Kontaktzonen (P1, P2) innerhalb der ersten und der zweiten Seitenfläche (210, 211) aufrechtzuerhalten.

2. Verfahren nach Anspruch 1, **dadurch gekennzeichnet, dass** der Bearbeitungskopf (123), und mit ihm die Stabilisierungsvorrichtung (10), in einem Ausrichtungswinkel (θ) in einer Weise winkelausgerichtet wird, die mit dem Schritt des Bewegens der Platte (200) und des Bearbeitungskopfes (123) in einer Weise koordiniert ist, um die Kontaktzonen (P1, P2) auf der Winkelhalbierenden eines Winkels (α), der zwischen den zu der Ecke benachbarten Seiten vorliegt, zu halten.

3. Verfahren nach Anspruch 2, **dadurch gekennzeichnet, dass,** während die Ecke bearbeitet wird, der Ausrichtungswinkel (θ) eine Funktion des Winkels (α) ist.

4. Verfahren nach irgendeinem vorstehenden Anspruch, **dadurch gekennzeichnet, dass,** während die Ecke bearbeitet wird, der Orientierungswinkel (θ) auch eine Funktion der Position der Platte (200) in der Vorwärtsbewegungsrichtung (F) und der Position des Bearbeitungskopfes (123) entlang der Bearbeitungsachse (Y) ist.

5. Verfahren nach irgendeinem vorstehenden Anspruch, **dadurch gekennzeichnet, dass** der Bearbeitungsschritt ohne Unterbrechungen oder Diskontinuitäten erfolgt.

6. Verfahren nach Anspruch 2 oder 3, **dadurch gekennzeichnet, dass** der Winkel (α) kleiner als 90° ist.

7. Verfahren nach irgendeinem vorstehenden Anspruch, **dadurch gekennzeichnet, dass** die Ecke scharf oder abgerundet ist.

8. Vorrichtung (100) zum Bearbeiten von Platten (200), aufweisend:
- Bewegungsmittel (111, 112), die konfiguriert sind, um mindestens eine Platte (200) in einer Vorwärtsbewegungsrichtung (F) zu bewegen,
- mindestens eine Bearbeitungseinheit (113), die einen Bearbeitungskopf (123) aufweist, an dem mindestens ein Bearbeitungswerkzeug (125) und eine Stabilisierungsvorrichtung (10) installiert sind, wobei die Stabilisierungsvorrichtung (10) ein erstes und ein zweites Greifelement (11, 12) aufweist, die einander gegenüberliegen und zugewandt sind, wobei der Bearbeitungskopf (123), und mit ihm die Stabilisierungsvorrichtung (10), sowohl linearbewegbar als auch selektiv drehbar ist gemäß einem Ausrichtungswinkel (θ), **dadurch gekennzeichnet, dass** sie eine zentrale Steuereinheit (116) aufweist, die konfiguriert ist, um ein spezifisches Bearbeitungsprogramm durchzuführen, das die Skripte enthält, um zumindest die Bewegungsmittel (111, 112) und den Bearbeitungskopf (123) in einer koordinierten Weise zu steuern, so dass die Vorrichtung (100) das Verfahren gemäß irgendeinem vorstehenden Anspruch durchführt.

9. Vorrichtung (100) gemäß Anspruch 8, **dadurch gekennzeichnet, dass** die Greifelemente (11, 12) in einem festen radialen Abstand (D) von dem Bearbeitungswerkzeug (125) angeordnet sind.

10. Vorrichtung (100) gemäß Anspruch 8, **dadurch gekennzeichnet, dass** die Greifelemente (11, 12) in einem einstellbaren radialen Abstand (D) von dem Bearbeitungswerkzeug (125) angeordnet sind.

11. Vorrichtung (100) gemäß irgendeinem Anspruch von 8 bis 10, **dadurch gekennzeichnet, dass** die zentrale Steuereinheit (116) so konfiguriert ist, dass sie alle geometrischen Daten empfängt, die imstande sind, die Form und die Abmessungen der Platte (200) zu definieren, einschließlich einer Anfangsposition der Platte (200) in der Vorwärtsbewegungsrichtung (F).

12. Vorrichtung nach irgendeinem Anspruch von 9 bis 11, **dadurch gekennzeichnet, dass** die zentrale Steuereinheit (116) so konfiguriert ist, dass sie als Eingabe den Wert des Abstands (D) der Greifelemente vom Bearbeitungswerkzeug empfängt.

## Revendications

1. Procédé pour maintenir et effectuer un usinage sur une feuille (200) qui présente une première et une seconde surface latérale opposée (210, 211) et un bord périphérique (212), comprenant :
- une étape de maintien, dans laquelle des premier et second organes de préhension (11, 12) maintiennent ladite feuille (200) de manière coulissante, en la mettant en contact dans au moins deux zones de contact respectives (P1, P2) desdites première et seconde surfaces latérales (210, 211),
- une étape d'usinage, dans laquelle un outil d'usinage (125) usine ledit bord périphérique (212), au cours de laquelle les étapes coordonnées suivantes ont également lieu
- une étape de déplacement de ladite feuille (200), qui est amenée à avancer ou à reculer par rapport audit outil d'usinage (125) dans une direction d'avancement (F), et
- une étape de déplacement d'une tête d'usinage (123), sur laquelle sont installés au moins un outil d'usinage (125) et un dispositif de stabilisation (10) présentant lesdits premier et second organes de préhension opposés et en regard (11, 12), ledit outil d'usinage (125) étant déplacé le long d'un axe d'usinage (Y),
**caractérisé en ce que** lorsque ledit outil d'usinage (125) effectue l'usinage à proximité de ou en correspondance avec un coin dudit bord périphérique (212), ledit procédé comprend une étape dans laquelle ladite tête d'usinage (123), et avec elle ledit dispositif de stabilisation (10), est orientée angulairement d'un angle d'orientation (θ) de manière coordonnée avec ladite étape de déplacement de ladite feuille (200) et/ou de ladite tête d'usinage (123), afin de maintenir lesdites zones de contact (P1, P2) à l'intérieur desdites première et seconde surfaces latérales (210, 211).

2. Procédé selon la revendication 1, **caractérisé en ce que** ladite tête d'usinage (123), et avec elle ledit dispositif de stabilisation (10), est orientée angulairement d'un angle d'orientation (θ) de manière coordonnée avec ladite étape de déplacement de ladite feuille (200) et de ladite tête d'usinage (123), afin de maintenir lesdites zones de contact (P1, P2) sur la bissectrice d'un angle (α) compris entre les côtés adjacents audit coin.

3. Procédé selon la revendication 2, **caractérisé en ce que** pendant l'usinage dudit coin, ledit angle d'orientation (θ) dépend dudit angle (α).

4. Procédé selon une quelconque revendication précédente, **caractérisé en ce que** pendant l'usinage dudit coin, ledit angle d'orientation (θ) dépend également de la position de ladite feuille (200) dans ladite direction d'avancement (F) et de la position de ladite tête d'usinage (123) le long dudit axe d'usinage (Y).

5. Procédé selon une quelconque revendication précédente, **caractérisé en ce que** ladite étape d'usinage a lieu sans interruptions ni discontinuités.

6. Procédé selon la revendication 2 ou 3, **caractérisé en ce que** ledit angle (α) est inférieur à 90°.

7. Procédé selon une quelconque revendication précédente, **caractérisé en ce que** ledit coin est pointu ou arrondi.

8. Appareil (100) d'usinage de feuilles (200), comprenant :
- des moyens de déplacement (111, 112) configurés pour déplacer au moins une feuille (200) dans une direction d'avancement (F),
- au moins une unité d'usinage (113) comprenant une tête d'usinage (123) sur laquelle au moins un outil d'usinage (125) et un dispositif de stabilisation (10) sont installés, ledit dispositif de stabilisation (10) présentant des premier et second organes de préhension opposés et en regard (11, 12), dans lequel ladite tête d'usinage (123) est à la fois mobile linéairement et également sélectivement rotative, et avec elle ledit dispositif de stabilisation (10), selon un angle d'orientation (θ), **caractérisé en ce qu'**il comprend une unité de commande centrale (116) configurée pour exécuter un programme d'usinage spécifique qui contient les scripts pour gérer au moins lesdits moyens de déplacement (111, 112) et ladite tête d'usinage (123) de manière coordonnée, de sorte que ledit appareil (100) exécute le procédé selon une quelconque revendication précédente.

9. Appareil (100) selon la revendication 8, **caractérisé en ce que** lesdits organes de préhension (11, 12) sont disposés à une distance radiale fixe (D) dudit outil d'usinage (125).

10. Appareil (100) selon la revendication 8, **caractérisé en ce que** lesdits organes de préhension (11, 12) sont disposés à une distance radiale réglable (D) dudit outil d'usinage (125).

11. Appareil (100) selon l'une quelconque des revendications 8 à 10, **caractérisé en ce que** ladite unité de commande centrale (116) est configurée pour recevoir en entrée toutes les données géométriques aptes à définir la forme et les dimensions de ladite feuille (200), incluant une position initiale de ladite feuille (200) dans ladite direction d'avancement (F).

12. Appareil selon l'une quelconque des revendications 9 à 11, **caractérisé en ce que** ladite unité de commande centrale (116) est configurée pour recevoir en entrée la valeur de ladite distance (D) des organes de préhension par rapport audit outil d'usinage.
